# EUROPEAN PATENT SPECIFICATION

(11) **EP 2 188 553 B1**
(45) Date of publication and mention of the grant of the patent: **05.12.2012**
(21) Application number: 08799060.2
(22) Date of filing: 02.09.2008
(51) Int. Cl.: F16J 1/10

(54) **PISTON SEAL GUIDE BEARING**
KOLBENDICHTUNGSFÜHRUNGSLAGER
PALIER DE GUIDAGE DE JOINT DE PISTON

(30) Priority: 30.08.2007 US 969070 P
(43) Date of publication of application: 26.05.2010
(73) Proprietor: Graco Minnesota Inc., Minneapolis, MN 55413-1894 (US)
(72) Inventor: ROSS, Daniel P., Maplewood, Minnesota 55109 (US); QUAM, Paul R., Minneapolis, Minnesota 55405 (US)
(74) Representative: Cloughley, Peter Andrew
(86) International application number: PCT/US2008/074990
(87) International publication number: WO 2009/029926

(56) References cited:
- EP-A1- 0 942 204
- US-A- 5 740 718
- US-A1- 2004 150 168
- US-B1- 6 212 998
- US-B1- 6 305 265

## Description

### BACKGROUND ART

Priming piston reciprocating pumps have been well known for use in pumping highly viscous fluids such as sealants and adhesives. Such pumps have traditionally had a metal-to-metal clearance between the piston guide and the piston on the order of 0.051 cm (0.020 inches). The large gap allowed the piston guide and piston seat to rock side to side and wear unevenly and prematurely with such wear increasing the gap which in turn led to even more wear.

US 6,305,265 discloses a pump apparatus according to the preamble of claim 1 comprising a pump body having a bore therein and a piston mounted within the bore so that the piston may be reciprocated within the bore between first and second positions. A sleeve seal assembly mounted to the pump body contacts the piston as the piston moves between the first and second positions. A piston seal assembly mounted to the piston contacts the bore in the pump body and is located on the piston so that the piston seal assembly does not contact the sleeve seal assembly as the piston is reciprocated between the first and second positions within the bore of the pump body.

EP 0942204 discloses a piston sealing ring assembly for sealing the piston/cylinder interface of a double-acting gas compressor including a first and second cut piston sealing ring each bounded by first and second planar surfaces. The first piston sealing ring has an overlapped cut with generally circumferentially extending inner and outer overlapping portions, which contact each other to form a continuous seal extending from the first surface to the second surface of the first piston sealing ring and separate an inner ring gap from an outer ring gap. The periphery of the outer ring gap of the first piston sealing ring at the first surface is sealed by the second surface of the second piston sealing ring. The second piston sealing ring is similarly disposed in relation to the first piston sealing ring so its outer ring gap is sealed at the second surface by the first surface of the first piston sealing ring.

### DISCLOSURE OF THE INVENTION

It is therefore an object of this invention to provide a priming piston pump which decreases wear of the piston seal, extends the functional life of the piston seal and reduces wear in the piston guide.

According to an aspect of the invention, there is provided a priming piston reciprocating pump as defined in claim 1.

The piston guide is provided with a bearing member in the inner diameter (ID) of the upper end (in normal orientation) of the guide. The bearing is formed of 25% carbon-filled PTFE and may be fitted without tools into the aforementioned ID. Such a bearing allows a negligible clearance to be utilized between the bearing and the piston leading to the desired reduction in wear.

These and other objects and advantages of the invention will appear more fully from the following description made in conjunction with the accompanying drawings wherein like reference characters refer to the same or similar parts throughout the several views.

### BRIEF DESCRIPTION OF DRAWINGS

Figure 1 is a cross-section of a priming piston pump.

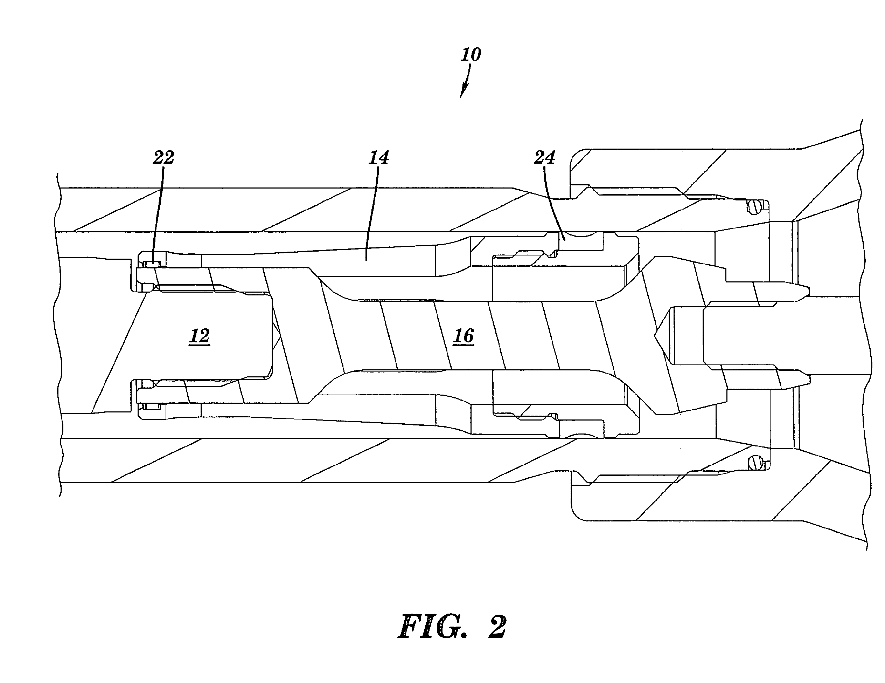

Figure 2 is a detailed cross-section of the piston guide assembly utilizing the instant invention.

### BEST MODE FOR CARRYING OUT THE INVENTION

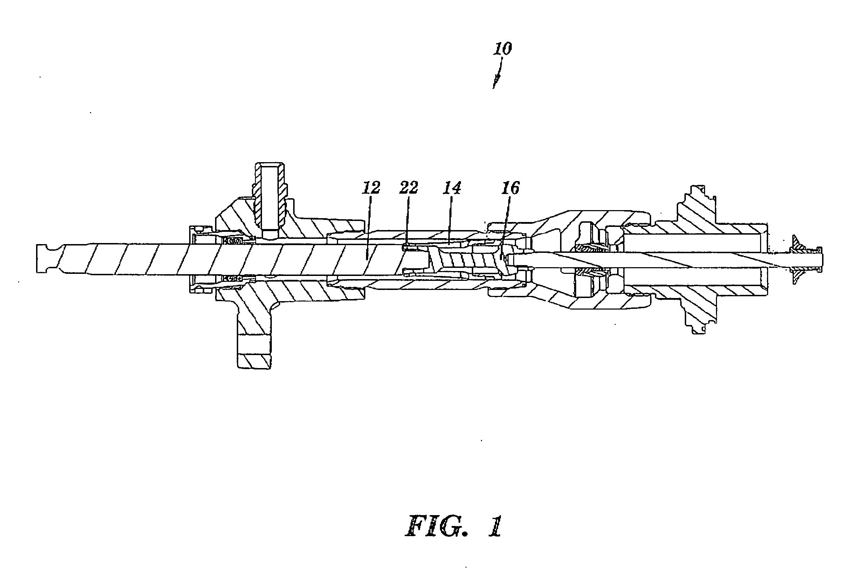

A priming piston reciprocating pump 10 is shown in Figure 1. A rod 12 has a piston 16 threadedly secured to the lower end (toward the right in the drawings) of rod 12. The piston guide 14 encircles piston 16 and is provided with a bearing member 22 in the inner diameter (ID) of the upper end (in normal orientation) of the guide 14. The bearing 22 is formed of 25% carbon-filled PTFE and may be fitted without tools into the aforementioned ID. Such a bearing 22 allows a negligible clearance to be utilized between the bearing 22 and the piston 16. Piston seal 24 is a part of known pumps of this type and is located on the OD (outer diameter) of the lower end of guide assembly 14.

It is contemplated that various changes and modifications may be made to the piston guide assembly without departing from the scope of the invention, which is defined by the following claims.

## Claims

1. A priming piston reciprocating pump (10) comprising:
a rod (12);
a piston (16);
a piston guide (14) encircling the piston (16), the guide (14) having an inner diameter, an outer diameter, a lower end and an upper end, the lower end being the end of the guide (14) further from the rod (12) and the upper end being the end of the guide (14) closer to the rod (12);
a piston seal (24) located on the outer diameter of the lower end of the guide (14); and **characterized by**
a bearing member (22) located in the inner diameter of the upper end of the guide (14).

2. The pump (10) of claim 1, wherein the bearing member (22) is formed of 25% carbon-filled PTFE.

## Patentansprüche

1. Saug-Hubkolbenpumpe (10), die Folgendes umfasst:
ein Pleuel (12);
einen Kolben (16);
eine Kolbenführung (14), die den Kolben (16) umfängt, wobei die Führung (14) einen Innendurchmesser, einen Außendurchmesser, ein unteres Ende und ein oberes Ende aufweist, wobei das untere Ende das Ende der Führung (14) ist, das weiter von dem Pleuel (12) entfernt liegt, und das oberes Ende das Ende der Führung (14) ist, das näher bei dem Pleuel (12) liegt;
eine Kolbendichtung (24), die an dem Außendurchmesser des unteren Endes der Führung (14) angeordnet ist; und **gekennzeichnet durch**
ein Lagerelement (22), das in dem Innendurchmesser des oberen Endes der Führung (14) angeordnet ist.

2. Pumpe (10) nach Anspruch 1, wobei das Lagerelement (22) aus 25 % karbongefülltem PTFE besteht.

## Revendications

1. Pompe alternative à piston d'amorçage (10) comprenant
une tige (12) ;
un piston (16) ;
un guide de piston (14) encerclant le piston (16), le guide (14) ayant un diamètre intérieur, un diamètre extérieur, une extrémité inférieure et une extrémité supérieure, l'extrémité inférieure étant l'extrémité du guide (14) plus éloignée de la tige (12) et l'extrémité supérieure étant l'extrémité du guide (14) plus proche de la tige (12) ;
un joint de piston (24) situé sur le diamètre extérieur de l'extrémité inférieure du guide (14) ; et **caractérisé par**
un élément de palier (22) situé dans le diamètre intérieur de l'extrémité supérieure du guide (14).

2. Pompe (10) selon la revendication 1, dans lequel l'élément de palier (22) est formée de PTFE rempli à 25% de carbone.
